# EUROPÄISCHE PATENTANMELDUNG

(11) **EP 1 705 102 A1**
(43) Veröffentlichungstag der Anmeldung: **27.09.2006**
(21) Anmeldenummer: 06111471.6
(22) Anmeldetag: 21.03.2006
(51) Int. Cl.: B62D 6/00

(54) **Kraftfahrzeug mit lenkbaren Vorderrädern und einer Lenkfunktion an den Hinterrädern**

(30) Priorität: 23.03.2005 DE 102005013378
(71) Anmelder: Bayerische Motoren Werke Aktiengesellschaft, 80809 München (DE)
(72) Erfinder: Glanzer, Michael, 80336 München (DE); Fleck, Reidar, 85221 Dachau (DE)

(57) **Zusammenfassung**

Die Erfindung betrifft ein Kraftfahrzeug mit lenkbaren Vorderrädern und einem Lenksystem, mit weichem dem vom Fahrer vorgegebenen Lenkwinkel angesteuert durch eine elektronische Steuereinheit ein gleichsinniger oder gegensinniger Zusatz-Lenkwinkel hinzugefügt werden kann, insbesondere mit einem eine mechanische Kopplung zwischen der Lenkhandhabe des Fahrers und einem den lenkbaren Vorderrädern zugeordneten Lenkgetriebe gewährleistenden Überlagerungs-Lenksystem, sowie mit einer Lenkfunktion an den Hinterrädern, die angesteuert durch eine elektronische Steuereinheit über eine Stelleinheit mit einem geeigneten Getriebe einen Lenkwinkel an den Hinterrädern einstellen kann. In den Fällen, in denen an den Hinterrädern ein zu den Vorderrad-Lenkwinkeln gleichsinniger Lenkwinkel eingestellt wird, wird im wesentlichen der Betrag dieses Hinterrad-Lenkwinkels an den Vorderrädern gleichsinnig zusätzlich zum vom Fahrer vorgegebenen Lenkwinkel sowie gegebenenfalls zusätzlich zu dem von der elektronischen Steuereinheit ohne Berücksichtigung der Hinterrad Lenkung hinzugefügten Lenkwinkel hinzugefügt. Im Falle des Untersteuerns des Fahrzeugs wird der an den Vorderrädern eingestellte Lenkwinkel verringert und an den Hinterrädern ein zum Vorderrad-Lenkwinkel gegensinniger Lenkwinkel eingestellt.

## Beschreibung

Die Erfindung betrifft ein Kraftfahrzeug mit lenkbaren Vorderrädern und einem Lenksystem, mit welchem dem vom Fahrer vorgegebenen Lenkwinkel angesteuert durch eine elektronische Steuereinheit ein gleichsinniger oder gegensinniger Zusatz-Lenkwinkel hinzugefügt werden kann, insbesondere mit einem eine mechanische Kopplung zwischen der Lenkhandhabe des Fahrers und einem den lenkbaren Vorderrädern zugeordneten Lenkgetriebe gewährleistenden Überlagerungs-Lenksystem, sowie mit einer Lenkfunktion an den Hinterrädern, die angesteuert durch eine elektronische Steuereinheit über eine Stelleinheit mit einem geeigneten Getriebe einen Lenkwinkel an den Hinterrädern einstellen kann.

Bekannt, jedoch derzeit noch selten in Serie sind Fahrzeug-Lenksysteme, die unabhängig von der Lenkradwinkeleingabe des Fahrzeugs-Fahrers bzw. überlagert zu dieser Lenkwinkel an den Vorderrädern einzustellen in der Lage sind. Mit einem solchen Vorderräder-Lenksystem kann bspw. die Lenkübersetzung in Abhängigkeit von der Fahrgeschwindigkeit des Fahrzeugs geändert werden. Es kann aber auch eine Stabilisierung des Fahrzeugs in kritischen Fahrzuständen durch gezielte Einstellung eines Lenkwinkels, nämlich durch selbsttätiges "Gegenlenken" erreicht werden, wozu von einer entsprechenden elektronischen Steuereinheit insbesondere auf ein den Fahrer-Lenkwunsch wiedergebendes Sensor-Signal, auf ein die Fahrzeug-Geschwindigkeit wiedergebendes Sensor-Signal, auf ein die Fzg.-Ouerbeschleunigung wiedergebendes Signal sowie auf ein die Gierbewegung (insbesondere Giergeschwindigkeit) des Fahrzeugs wiedergebendes Signal zugegriffen werden kann.

Weiterer bekannter Stand der Technik sind Lenksysteme, die in der Lage sind, die Räder an der Fzg.-Hinterachse zusätzlich zu den Vorderrädern zu lenken, d.h. den Schräglaufwinkel der Hinterräder gezielt zu verändern, wobei die bislang bekannten Systeme stets in Form einer Steuerung ausgebildet sind, d.h. in Abhängigkeit von einer bestimmten Randbedingung wird ein hierzu geeignet vorgegebener Lenkwinkel (üblicherweise in der Größenordnung zwischen 1° und 5°) an den Fzg.-Hinterrädern eingestellt. Üblicherweise wird dieser Hinterachs-Lenkwinkel dabei in Abhängigkeit von der Fahrgeschwindigkeit des Fahrzeugs bei Vorgabe eines Lenkwunsches des Fahrers unter Berücksichtung der vorgegebenen Lenkrichtung derart eingestellt, dass sich ein verbessertes Fahrverhalten ergibt. So kann bei geringen Fahr-Geschwindigkeiten durch zu den Vorderrädern gegensinniges Lenken der Hinterräder und einem damit verbundenen schnelleren Aufbau der Fzg.-Giergeschwindigkeit die Kurvenwilligkeit bzw. Agilität des Fahrzeugs erhöht werden. Ebenfalls kann im sehr geringen Geschwindigkeitsbereich, so insbesondere beim Einparken, durch gegensinniges Lenken der Hinterräder ein reduzierter Wendekreis und somit ein verringerter Lenkrad-Winkelbedarf quasi aufgrund einer virtuellen Verkürzung des Fzg.-Radstandes erreicht werden. Bei höheren Fahr-Geschwindigkeiten hingegen kann durch zu den Vorderrädern gleichsinniges, stationäres Mitlenken der Hinterräder eine Reduzierung des Schwimmwinkels des Fahrzeugs und damit eine bessere Fahrzeug-Stabilität erreicht werden. Letzteres geht jedoch (zumindest geringfügig) zu Lasten der Agilität des Fahrzeugs.

Für ein Kraftfahrzeug nach dem Oberbegriff des Anspruchs 1 diesbezüglich eine Verbesserung aufzuzeigen ist Aufgabe der vorliegenden Erfindung.

Die Lösung dieser Aufgabe ist dadurch gekennzeichnet, dass in den Fällen, in denen an den Hinterrädern ein zu den Vorderrad-Lenkwinkeln gleichsinniger Lenkwinkel eingestellt wird, ein Winkel vom Betrag in der Größenordnung von 50% bis 100% dieses Hinterrad-Lenkwinkels (und vorzugsweise im wesentlichen der Betrag des Hinterrad-Lenkwinkels) an den Vorderrädern gleichsinnig zusätzlich zum vom Fahrer vorgegebenen Lenkwinkel sowie gegebenenfalls zusätzlich zu dem von der elektronischen Steuereinheit ohne Berücksichtigung der Hinterrad Lenkung hinzugefügten Lenkwinkel hinzugefügt wird oder ist. Vorteilhafte Weiterbildungen sind Inhalt der Unteransprüche.

In der Erkenntnis, dass ein zum Lenkwinkel der Vorderräder gleichsinniger Lenkwinkel an den Hinterrädern die Fahr-Stabilität des Fahrzeugs bei Kurvenfahrt signifikant erhöht, wird also angestrebt, den Nachteil dieser Funktion, nämlich einen für den Fahrer spürbaren Agilitätsverlust, zu minimieren. Dies kann wie vorgeschlagen nun selbsttätig erfolgen, indem der Lenkwinkel an den Vorderrädern gegenüber dem vom Fahrer vorgegebenen Lenkwinkel vergrößert wird, was mit einem Lenksystem, mit welchem dem vom Fahrer vorgegebenen Lenkwinkel angesteuert durch eine elektronische Steuereinheit ein gleichsinniger oder gegensinniger Zusatz-Lenkwinkel hinzugefügt werden kann, einfach durchgeführt werden kann. Falls im übrigen dieses Lenksystem dem vom Fahrer vorgegebenen Lenkwinkel aufgrund anderer Randbedingungen bereits einen weiteren Lenkwinkel hinzufügt, so bspw. im Rahmen der eingangs genannten geschwindigkeitsabhängigen Veränderung der Lenk-Übersetzung, so werden zum vom Fahrer vorgegebenen Vorderrad-Lenkwinkel nun mehrere Lenkwinkel hinzugefügt, nämlich neben dem beispielsweise die Lenk-Übersetzung verändernden Lenkwinkel nun zusätzlich wie hiermit vorgeschlagen der Lenkwinkel an den Hinterrädern.

Vorzugsweise kann der gemäß vorliegendem Vorschlag hinzugefügte Lenkwinkel der Hinterräder im wesentlichen betragsgleich hinzugefügt werden. Es wurde erkannt, dass sich auf diese Weise im Vergleich zu einem Fahrzustand, bei dem die Hinterräder nicht gelenkt werden, im wesentlichen die gleiche Gierrate ergibt, so dass der Fahrer bei Mitlenken der Hinterräder zumindest die gleiche (oder sogar eine verbesserte) Fahrzeug-Agilität verspürt, als bei einem Fahrzeug ohne gelenkte Hinterräder. In Abhängigkeit von der gewünschten Auslegung des Fahrverhaltens bzw. der Fahrdynamik des Fahrzeugs kann jedoch an den Vorderrädern auch ein zusätzlicher Lenkwinkel eingestellt wird, der um ein gewisses Maß geringer (oder geringfügig höher) als der an den Hinterrädern eingestellte Lenkwinkel ist, so dass in den Fällen, in denen an den Hinterrädern ein zu den Vorderrad-Lenkwinkeln gleichsinniger Lenkwinkel eingestellt wird, ein Winkel vom Betrag in der Größenordnung von 50% bis 100% dieses Hinterrad-Lenkwinkels an den Vorderrädern gleichsinnig zusätzlich zum vom Fahrer vorgegebenen Lenkwinkel sowie gegebenenfalls zusätzlich zu dem von der elektronischen Steuereinheit ohne Berücksichtigung der Hinterrad Lenkung hinzugefügten Lenkwinkel hinzugefügt wird oder ist.

Soweit wurde stets davon gesprochen, dass in Abhängigkeit vom Lenkwinkel an den Hinterrädern an den Vorderrädern ein zusätzlicher Lenkwinkel eingestellt wird oder ist. Die Einstellung bzw. Auswahl des Lenkwinkels an den Vorderrädern kann also auf verschiedene Arten erfolgen. So kann unter Berücksichtigung des Fahrer-Lenkwunsches sowie eines gegebenenfalls hinzu addierten gleichsinnigen oder gegensinnigen Lenkwinkels (im Sinne ein Veränderung der Lenkübersetzung) der Hinterrad-Lenkwinkel zusätzlich addiert werden, und zwar entweder auf mechanischen Wege bspw. über ein Überlagerungsgetriebe des Überlagerungs-Lenksystems oder auf rein elektronischem Wege im Falle eines steer-by-wire-Systems. Alternativ ist es aber auch möglich, den Vorderrad-Lenkwinkel direkt über geeignete Kennfelder oder dgl. aus unterschiedlichen Randbedingungen, zu denen auch der aktuelle Hinterrad-Lenkwinkel zählt, zu ermitteln. Während im erstgenannten Fall zumindest ein Teil des Hinterrad-Lenkwinkels an den Vorderrädern zusätzlich eingestellt wird, ist im zweitgenannten Fall zumindest ein Teil des Hinterrad-Lenkwinkels an den Vorderrädern zusätzlich eingestellt. Im zweitgenannten Fall wird also bei der Bestimmung der Zusatzlenkwinkel an den Vorderrädern aus fahrdynamischen Größen wie Fahrgeschwindigkeit, Fahrerlenkwinkel und anderen Größen auch der an den Hinterrädern eingestellte Lenkwinkel berücksichtigt. Dabei werden die sog. Zusatzlenkwinkel nicht einzeln ermittelt und jeweils separat an den Vorderrädern "addiert", sondern von vorneherein in einer integrierten Einheit ermittelt.

Die hiermit allgemein vorgeschlagene Verfahren zur Einstellung eines Vorderrad-Lenkwinkels unter Berücksichtigung eines an den Hinterrädern eingestellten Lenkwinkels hat einen weiteren Vorteil. Sollte nämlich (insbesondere) der mechanische Bestandteil der Hinterrad-Lenkung in einem Zustand ausfallen, in dem die Hinterräder zumindest geringfügig eingeschlagen, d.h. gelenkt sind, und verbleiben die Hinterräder dann in dieser eingeschlagenen Position, so kann der Fahrer sein Fahrzeug zwar weiterhin geradeaus bewegen, jedoch muss er hierfür konstant einen entsprechenden Lenkwinkel an den Vorderrädern einstellen. Grundsätzlich ist dies zumindest im Falle der weiter oben genannten Größenordnung für Hinterrad-Lenkwinkel bis maximal 5° unproblematisch, jedoch dürfte der Fahrer des Fahrzeugs durch die hieraus resultierende konstante Schiefstellung seines Lenkrads irritiert werden. Mit der hier vorgeschlagenen Funktion hingegen kann die entsprechende Einstellung eines eine defekte Hinterrad-Lenkung kompensierenden Lenkwinkels an den Vorderrädern selbsttätig und für den Fahrer zunächst unbemerkbar und insbesondere ohne Beeinflussung der Position seines Lenkrads erfolgen, so dass der Fahrer hierdurch also nicht irritiert wird. Da sich in einem solchen Fall jedoch das Fahrzeug unter Vorliegen eines stationären Schwimmwinkels im Krebsgang bewegt, sollte zumindest irgendein Hinweis an den Fahrer ergehen, dass er wegen eines Defekts an der Hinterrad-Lenkung eine Werkstatt aufsuchen möge.

Im Sinne einer vorteilhaften Weiterbildung wird eine besonders günstige Funktion für den Fall des Untersteuerns des Kraftfahrzeugs vorgeschlagen. Alleine mit einem den (bzw. die) Vorderrad-Lenkwinkel beeinflussenden System ist es bekanntlich nicht möglich, das Fahrzeug zu stabilisieren ohne die Zielgenauigkeit zu verschlechtern. Vielmehr ist es zur Stabilisierung des Fahrzeugs erforderlich, den Lenkeinschlag an der Vorderachse zu reduzieren, wodurch sich jedoch der befahrene Kurvenradius vergrößert, was zum Verlust der Kursstabilität führt. Werden hingegen - wie nun vorgeschlagen - in einem solchen Untersteuer-Fall an den Hinterrädern aktiv gegensinnig zu den Vorderrädern gerichtete Lenkwinkel eingestellt, so besteht die Möglichkeit, den (zur Stabilisierung des Fahrzeugs) verringertem Lenkeinschlag an der Vorderachse entsprechend an den Hinterrädern aufzubringen und damit das Fahrzeug auch unter Beibehaltung des gewünschten Kurses zu stabilisieren. Mit einer solchen Funktion wird dann - anders als im bekannten Stand der Technik - der Lenkwinkel an den Hinterrädern nicht mehr gesteuert, sondern vielmehr geregelt eingestellt, und zwar in Abhängigkeit von der Überwachung des Untersteuerns (bzw. Übersteuerns) des Fahrzeugs, d.h. allgemein abhängig von einer Überwachung der Fahrstabilität in einer elektronischen Steuereinheit unter Auswertung hierfür bekannter Sensorsignale, welche die Querbeschleunigung, die Fahrgeschwindigkeit, die Gierrate sowie den Fahrer-Lenkwunsch darstellen.

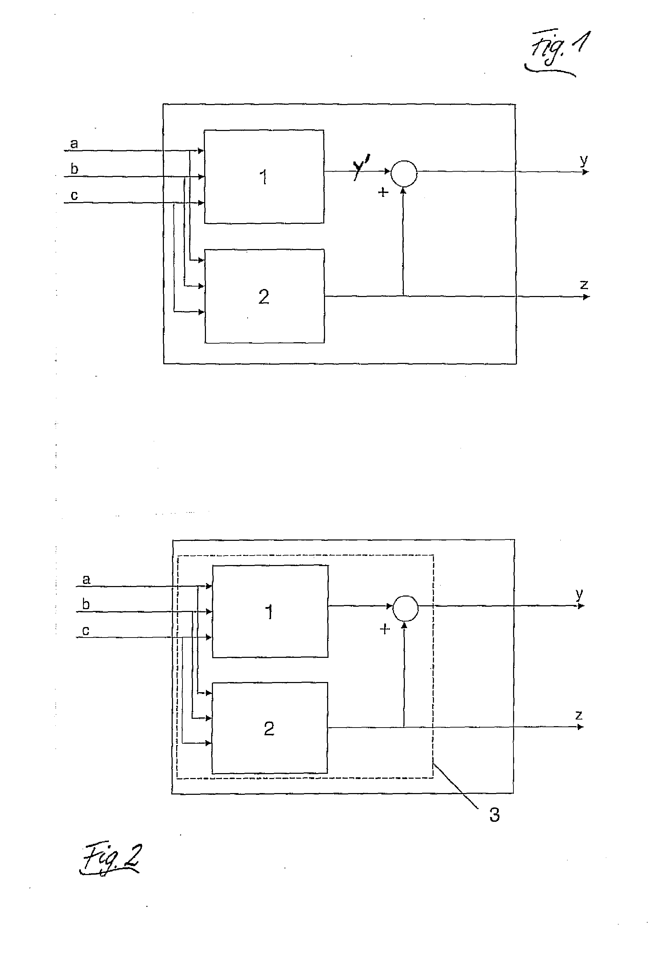

Die beigefügte Figur 1 verdeutlicht die Logik für die Bestimmung eines Zusatz-Lenkwinkels y an der Fahrzeug-Vorderachse, der (bspw. mittels eines Überlagerungs-Lenksystems, wozu beispielshalber auf die US 3,831,701 verwiesen wird) addiert zum vom Fahrer vorgegebenen Lenkwinkel a an den lenkbaren Vorderrädern eingestellt wird. Dabei wird in einer Steuereinheit 1 aus dem Fahrer-Lenkwinkel a, der Fahrgeschwindigkeit b des Fahrzeugs und weiteren fahrdynamischen Größen c zunächst ein Zusatzlenkwinkel y' bestimmt. Aus den selben Eingangsgrößen a, b, c kann in einer weiteren Steuereinheit 2 ein Lenkwinkel z für die lenkbaren Räder der Fzg.-Hinterachse bestimmt werden. Dieser Hinterrad-Lenkwinkel z wird zum Zusatzlenkwinkel y' hinzu addiert, um den tatsächlichen Zusatzlenkwinkel y zu erhalten.

Während hier (gemäß Fig.1) eine tatsächliche Addition des an den Hinterrädern eingestellten Lenkwinkels oder eines Anteils hiervon zum Vorderrad-Lenkwinkel durchgeführt wird, kann diese Addition auch nur "virtuefl" oder "fiktiv" durchgeführt werden, nämlich in einer zentralen bzw. integrierten Steuereinheit 3, (vgl. Fig.2), in der die Steuereinheiten 1 und 2 zusammengefasst sind, und in der aus dem Fahrer-Lenkwinkel a, der Fahrgeschwindigkeit b des Fahrzeugs und weiteren fahrdynamischen Größen c quasi gleichzeitig ein Zusatzlenkwinkel y für die Vorderachse und ein Lenkwinkel z für die Hinterräder bestimmt wird. Dabei ist im Zusatzlenkwinkel y der Hinterrad-Lenkwinkel z berücksichtigt (bzw. zumindest anteilig hinzugefügt).

Mit den vorgeschlagenen Maßnahmen kann die Agilität (und die Fahrdynamik generell) des Fahrzeugs verbessert werden, wobei durchaus Details abweichend von obigen Erläuterungen gestaltet sein können, ohne den Inhalt der Patentansprüche zu verlassen.

## Patentansprüche

1. Kraftfahrzeug mit lenkbaren Vorderrädern und einem Lenksystem, mit welchem dem vom Fahrer vorgegebenen Lenkwinkel angesteuert durch eine elektronische Steuereinheit ein gleichsinniger oder gegensinniger Zusatz-Lenkwinkel hinzugefügt werden kann, insbesondere mit einem eine mechanische Kopplung zwischen der Lenkhandhabe des Fahrers und einem den lenkbaren Vorderrädern zugeordneten Lenkgetriebe gewährleistenden Überiagerungs-Lenksystem, sowie mit einer Lenkfunktion an den Hinterrädern, die angesteuert durch eine elektronische Steuereinheit über eine Stelleinheit mit einem geeigneten Getriebe einen Lenkwinkel an den Hinterrädern einstellen kann
**dadurch gekennzeichnet, dass** in den Fällen, in denen an den Hinterrädern ein zu den Vorderrad-Lenkwinkeln gleichsinniger Lenkwinkel eingestellt wird, ein Winkel vom Betrag in der Größenordnung von 50% bis 100% dieses Hinterrad-Lenkwinkels an den Vorderrädern gleichsinnig zusätzlich zum vom Fahrer vorgegebenen Lenkwinkel sowie gegebenenfalls zusätzlich zu dem von der elektronischen Steuereinheit ohne Berücksichtigung der Hinterrad Lenkung hinzugefügten Lenkwinkel hinzugefügt wird oder ist.

2. Kraftfahrzeug nach Anspruch 1,
**dadurch gekennzeichnet, dass** im wesentlichen der Betrag des Hinterrad-Lenkwinkels an den Vorderrädern gleichsinnig und zusätzlich eingestellt wird oder ist.

3. Kraftfahrzeug nach Anspruch 1,
**dadurch gekennzeichnet, dass** bei einem Ausfall der Lenkfunktion an den Hinterrädern der Betrag des Hinterrad-Lenkwinkels an den Vorderrädern gleichsinnig und zusätzlich eingestellt wird oder ist.

4. Kraftfahrzeug nach einem der vorangegangenen Ansprüche,
**dadurch gekennzeichnet, dass** im Falle des Untersteuerns des Fahrzeugs der an den Vorderrädern eingestellte Lenkwinkel verringert und an den Hinterrädern ein zum Vorderrad-Lenkwinkel gegensinniger Lenkwinkel eingestellt wird.
